# EUROPÄISCHE PATENTSCHRIFT

(11) **EP 1 512 318 B1**
(45) Veröffentlichungstag und Bekanntmachung des Hinweises auf die Patenterteilung: **31.03.2010**
(21) Anmeldenummer: 04019650.3
(22) Anmeldetag: 19.08.2004
(51) Int. Cl.: A01C 23/04, A01C 23/00, B60P 3/22

(54) **Behälter zum Befüllen mit Flüssigkeit**
Container for filling with a liquid
Reservoir a liquides

(30) Priorität: 02.09.2003 AT 13742003
(43) Veröffentlichungstag der Anmeldung: 09.03.2005
(73) Patentinhaber: Vakutec Gülletechnik GmbH, 4542 Nussbach (AT)
(72) Erfinder: Weingartner, Christian, 4552 Wartberg an der Krems (AT)

(56) Entgegenhaltungen:
- EP-A- 0 322 941
- EP-A- 1 157 601
- WO-A-00/64701
- DE-A- 3 606 272
- DE-U- 20 117 125
- FR-A- 2 646 317
- NL-A- 9 300 771

## Beschreibung

Die vorliegende Erfindung bezieht sich auf einen Behälter zum Befüllen mit Flüssigkeiten, insbesondere Gülletank, gegebenenfalls auch auf einem Güllewagen, mit einer Befüllungs- und Entleerungseinrichtung, die eine Pumpe zum Einfüllen bzw. Entleeren der Flüssigkeit sowie ein zugehöriges Leitungssystem und gegebenenfalls einen Vakuumkompressor zum Evakuieren des Behälters aufweist und mit einer Antriebseinheit für die Pumpen, die bevorzugt an die Antriebswelle eines Schleppfahrzeuges anschließbar ist, wobei das Leitungssystem eine Überlaufleitung beinhaltet, die zwischen einer Überlauföffnung im Behälter und einem Ansaugstutzen zum Ansaugen der Flüssigkeit angeordnet ist.

Ein dieser Gattung weitgehend entsprechender Stand der Technik ist in der EP-A-0 322 941 beschrieben. Dort ist ein Behälter offenbart, bei dem zum Befüllen mit Flüssigkeiten eine Befüllungs- und Entleerungseinrichtung sowie eine Antriebseinheit vorgesehen sind und wobei das Leitungssystem eine Überlaufleitung beinhaltet, die zwischen einer Überlauföffnung und einem Ansaugstutzen zum Ansaugen der Flüssigkeit angeordnet ist. Eine Vakuumpumpe zum Evakuieren des Behälters ist dort jedoch nicht zu entnehmen.

Ferner ist in der WO 2000/64701 A ein Stand der Technik beschrieben, bei welchem ein Güllefass durch eine Vakuumpumpe evakuiert und durch das entstehende Vakuum gefüllt werden kann. Im Güllevorratsbehälter (Güllegrube) ist zur Unterstützung der Vakuumbefüllung eine Hilfspumpe als Hilfe beim Befüllen des Güllefasses angeordnet. Diese Hilfspumpe wird durch die Schlepperhydraulik angetrieben. Im Güllefass endet eine Evakuierungsleitung, welche die Vakuumpumpe mit dem Güllefass verbindet. An dem der Vakuumpumpe gegenüber liegenden Ende der Evakuierungsleitung ist Ventil angeordnet. Bei einer bestimmten Füllhöhe der Gülle schließt das Ventil die Vakuumleitung und die Vakuumpumpe wird abgeschaltet. Zum Überlaufen der Gülle soll es gemäß der Lehre dieser Druckschrift nicht kommen können. Sollte gemäß der Lehre der Druckschrift WO 2000/64701 A jedoch konstruktionswidrig Gülle in die Evakuierungsleitung eindringen, würde diese über die Vakuumleitung in die Vakuumpumpe gelangen und die Vakuumpumpe zerstören oder zumindest beschädigen.

In der Druckschrift NL 9 300771 A ist ein ähnliches Güllefahrzeug mit einer Füllvorrichtung beschrieben. Hier handelt es sich um ein so genanntes Vakuumfass, welches mit Hilfe von Unterdruck, der durch eine Vakuumpumpe erzeugt wird, gefüllt werden soll. Zur Erhöhung der Füllgeschwindigkeit ist im Güllevorratsbehälter (Güllegrube) eine zusätzliche Pumpe vorgesehen. Bei dieser Vorrichtung ist eine Überlaufleitung vorgesehen, welche in einen Ausgleichsbehälter mündet, wodurch verhindert werden soll, dass überschüssige Gülle in die Vakuumpumpe gelangen kann.

In der EP 1157 601 A1 ist ein weiters Beispiel eines Gülletankwagens mit einem Rohrleitungssystem beschrieben, durch welches der Tank des Gülletankwagens mit Gülle gefüllt und auch wieder entleert werden kann. Ein Pumpenaggregat besteht aus einer Kreiselpumpe und einer Flüssigkeitsringpumpe. Es dient dazu, dass mittels der Flüssigkeitsringpumpe zuerst ein Abschnitt des Leitungssystems soweit evakuiert wird, bis Gülle im entlüfteten Ansaugschlauch nachströmt und die Kreiselpumpe füllt. In diesem Moment kann die Kreiselpumpe ihre Arbeit aufnehmen und Gülle aus dem Vorratsbehälter fördern. Die beiden Pumpen sind in einem gemeinsamen Gehäuse auf einer gemeinsamen Welle angeordnet und arbeiten parallel.

Als weiteres Beispiel für eine ähnliche Vorrichtung sei der in der DE 36 06 272 A1 beschriebene Gegenstand genannt. Dort ist eine Vorrichtung beschrieben, bei der eine Vakuumpumpe als Ansaugkompressor in die Druckleitung der Kreiselpumpe geschaltet ist. Zum Schutz gegen Überfüllung sind Sicherheitsmassnahmen in Form von Ventilen vorgesehen, die manuell von dem Bedienungspersonal betätigt werden, wenn diese in einem durchsichtigen Leitungsabschnitt das Auftreten von Gülle erkennen. Diese Sicherheitsmassnahme ist von erheblichen Sicherheitsrisiken begleitet.

Weitere bekannte Güllefässer werden in der Landwirtschaft üblicherweise bis häufig mit Hilfe von Vakuum befüllt, wobei zuerst das Fass unter Unterdruck gesetzt wird und dann die Gülle aus einer Güllegrube eingesaugt wird. Der Nachteil dabei ist, dass durch das Vakuum die Gülle aufschäumt, so dass das Fass nicht vollständig befüllt werden kann. Etwa 10 bis 20 Prozent des Fasses bleiben ungenutzt, weil Schwimmerventile zu früh die Zufuhr von Gülle stoppen.

Bei einer anderen Methode zur Fassbefüllung wird die Gülle mit Hilfe beispielsweise einer Exzenterschneckenpumpe in das Fass gepumpt. Allerdings besteht hier unter anderem die Gefahr, dass Fremdkörper in der Gülle die Pumpe beschädigen.

Des weiteren ist die eingangs erwähnte Kombination einer Vakuumpumpe mit einer nicht ansaugenden Kreiselpumpe bekannt. Die nicht ansaugende Kreiselpumpe kann problemlos in gewissem Rahmen Feststoffe transportieren ohne beschädigt zu werden. Da die Kreiselpumpe aufgrund ihres großen Freiraumes nicht selbstansaugend ist, wird die Ansaugung durch einen Vakuumkompressor erreicht. Durch das Vakuum wird die Kreiselpumpe mit Gülle gefüllt, worauf diese dann die Gülle fördert.

Hierbei ist es üblich, die Kreiselpumpe beispielsweise durch die Antriebswelle des Schleppers anzutreiben und die Vakuumpumpe hydraulisch - also mittelbar - vom Schlepper zu betreiben. Ein Beispiel hierfür ist in der DE 101 37 813 A1 beschrieben. Nachteil dabei ist die hohe Ölleistung und der geringe Wirkungsgrad, der durch die weite Entfernung von Antriebsquelle und Pumpe bedingt ist. Gleichzeitig wird durch einen solchen Aufbau nur ein verhältnismäßig kleiner Druck von circa einem halben Bar erzeugt.

In der DE 201 17 125 U1 ist eine Vorrichtung beschrieben, die es sich zur Aufgabe gemacht hat, ein Güllefass dahingehend zu verbessern, dass die Befüllung schneller abläuft und der Antriebsaufwand für die Kreiselpumpe deutlich reduziert wird.

Zur Lösung dieser Aufgabe schlägt die dort beschriebene Vorrichtung ein Güllefass vor, bei dem die Antriebseinheit ein Differential aufweist und die Pumpe wie auch der Vakuumkompressor je über eine Welle mit dem Differential verbunden sind.

Mit Hilfe dieser Anordnung lässt sich zum Beispiel über die Kreiselpumpe ein Überdruck von bis zu 5 bar erreichen, so dass die Gülle unter Druck in das Fass gepumpt wird Das Fass kann so wesentlich schneller befüllt und besser ausgenutzt werden, wobei gleichzeitig der Aufwand der Anordnung im Vergleich zum Stand der Technik wesentlich geringer ist, auf den aufwendigen Hydraulikantrieb und die damit verbundenen Probleme (Ölleitungen, Leckagen usw.) wird verzichtet.

Bei der bevorzugten Ausführungsform der dort beschriebenen Vorrichtung ist in der Antriebseinheit auch ein Getriebe vorgesehen. Mit Hilfe dieses Getriebes (gegebenenfalls mit Kupplung) lässt sich insbesondere die Kreiselpumpe steuern, so dass beispielsweise zum Ende des Befüllvorganges hin die Füllgeschwindigkeit verringert werden kann. Auf diese Weise ist ein genaues Befüllen des Fasses möglich. Das Getriebe erlaubt auch eine Anpassung der jeweiligen Drehzahlen.

Die bevorzugte Ausführungsform der dort beschriebenen Vorrichtung sieht ferner eine nass laufende Kreiselpumpe als Pumpe vor, wobei die nass laufende Kreiselpumpe den Vorteil hat, dass sie die Festkörper aus der Gülle transportieren kann, ohne beschädigt zu werden, beziehungsweise ohne den Fördervorgang zu unterbrechen. Eine Vakuumabdichtung der Pumpe ist nicht notwendig, da das Vakuum vom Vakuumkompressor erzeugt wird und nur dazu dient, den Ansaugvorgang der Pumpe zu unterstützen.

Es ist dort als günstig beschrieben, wenn Pumpe und/oder Vakuumkompressor direkt mit dem Differential verbunden sind. Auf diese Weise soll der Wirkungsgrad erhöht sein, da der Leistungsverlust durch die Kraftübertragungswege gering ist.

Als Sicherheitsmassnahme ist dort vorgeschlagen, im Güllefass eine verschließbare Belüftung vorzusehen. Nach dem Aufbau des Vakuums, wenn die Kreiselpumpe fördert, wird im Inneren des Fasses ein Druck aufgebaut, zu dessen Ausgleich die Belüftung geöffnet werden kann. Die Belüftung wird hierbei so gesteuert, dass insbesondere zum Ende des Befüllvorgangs kein Unterdruck mehr herrscht, um das Aufschäumen der Gülle zu unterbinden.

Es wird dort als günstig beschrieben, wenn die Vakuumpumpe mit Hilfe einer automatischen Abschaltung, beispielsweise einem Zeitrelais abgeschaltet wird (nach einstellbaren Erfahrungswerten), sobald die Kreiselpumpe nass läuft und zu fördern beginnt. Gleiches lässt sich zum Beispiel auch durch einen Flüssigkeits- oder Güllesensor, der nach der Pumpe angeordnet ist, erreichen.

Insbesondere soll es von Vorteil sein, wenn das Zeitrelais und die Belüftung miteinander steuerungstechnisch verbunden sind, so dass in dem Augenblick, in dem das Vakuum nicht mehr gebraucht wird, die Kreiselpumpe also zu fördern beginnt, sowohl die Pumpe abgeschaltet als auch die Lüftungen geöffnet werden.

Um ein Überfüllen des Fasses zu verhindern, soll es günstig sein, wenn im Güllefass ein Füllschalter zum Abschalten der Pumpe beziehungsweise Pumpen und/oder des Kompressors vorgesehen ist.

Da das Fass gemäß der dort vorgeschlagenen Vorrichtung mit relativ hohem Druck befüllt wird, ist es als vorteilhaft beschrieben, wenn entsprechende Sicherungen im beziehungsweise am Fass eingebaut sind, die ein Überfüllen beziehungsweise Beschädigen des Fasses verhindern. So ist weiterhin ein Überdruckventil, beispielsweise in einem Sicherheitsdom vorgesehen, das öffnet, falls der Druck zu hoch wird beziehungsweise der Füllstandschalter nicht anspringt.

Es ist weiter ein Sicherheitsventil direkt am Güllefass vorgesehen, das in ähnlicher Weise Überdruck beziehungsweise überschüssige Gülle entweichen lässt. Dies soll bei einer als besonders günstig bezeichneten Ausführungsform dadurch geschehen, dass ein rückwärtiger Güllefassdeckel mit einer überdruckempfindlichen Dichtung versehen ist, welche bei einem bestimmten Überdruck herausgedrückt wird. Bei diesem Ausführungsbeispiel sollen weitere Sicherheitsmassnahmen nicht mehr erforderlich sein.

Diese und die eingangs ausführlich zitierten Druckschriften zeigen deutlich, dass es beim Stand der Technik keine einfache und zuverlässige Lösung gibt, die bisher ermöglicht, ein Güllefass schnell und sicher zu füllen.

Der vorliegenden Erfindung liegt daher die Aufgabe zu Grunde, einen Behälter zum Befüllen mit Flüssigkeit zu schaffen, und zwar bevorzugt einen Güllebehälter, der es ermöglicht, schnell und vollständig gefüllt zu werden, und der dennoch keinen hohen apparativen Aufwand erfordert, um alle erforderlichen Sicherheitsvorschriften zu erfüllen, und der vor allem keine manuellen Eingriffe erfordert, um zu verhindern, dass der Behälter unter Überdruck gerät, was zu einem Sicherheitsrisiko führen könnte.

Diese Aufgabe wird von einem Behälter mit den Merkmalen des Anspruchs 1 erfüllt. Durch die Merkmale der abhängigen Ansprüche wird die Erfindung in vorteilhafter Weise noch weiter ausgestaltet.

Besonders vorteilhaft ist ein Behälter zum Befüllen mit Flüssigkeiten, insbesondere ein Gülletank, gegebenenfalls auch auf einem Güllewagen, mit einer Befüllungs- und Entleerungseinrichtung, die bevorzugt eine Pumpe zum Befüllen und Entleeren und einen Vakuumkompressor zum Evakuieren des Behälters sowie ein zugehöriges Leitungssystem aufweist und einer Antriebseinheit für die Pumpen, die bevorzugt an die Antriebswelle eines Schleppfahrzeuges anschließbar ist, wenn das Leitungssystem eine Überlaufleitung beinhaltet, in welcher ein vom Umgebungsdruck gesteuertes Ventil vorhanden ist, wobei die Überlaufleitung zwischen einer Überlauföffnung im Behälter und einem Ansaugstutzen zum Ansaugen der Flüssigkeit angeordnet ist.

Eine besonders einfache Bauform eines derartigen Ventils liegt vor, wenn das vom Umgebungsdruck gesteuerte Ventil durch einen Faltschlauch gebildet ist.

Aber auch, wenn das vom Umgebungsdruck gesteuerte Ventil durch einen Rohrabschnitt mit einer elastischen Membran gebildet ist, kann die Erfindung mit Vorteil realisiert werden. Es ist besonders vorteilhaft, wenn die Überlaufleitung zwischen einer Überlauföffnung im Behälter und einem Ansaugstutzen zum Ansaugen der Flüssigkeit angeordnet ist, weil dadurch das Austreten von Gülle ins Freie vermieden wird.

Weitere Vorteile der Erfindung ergeben sich, wenn die Kreiselpumpe und die Vakuumpumpe durch getrennt arbeitende Pumpen mit separaten Gehäusen gebildet sind, aber auch, wenn die Kreiselpumpe und die Vakuumpumpe in einem gemeinsamen Gehäuse kombiniert sind. Diese Bauform ist besonders günstig durch eine Flüssigkeitsringpumpe zu realisieren.

Weiter kann es vorteilhaft sein, wenn dem vom Umgebungsdruck gesteuerten Ventil ein an sich bekannter Schalter zum Abschalten der Kreiselpumpe zugeordnet ist, besonders, wenn das Ventil mit einem Schalter zum Abschalten der Kreiselpumpe kombiniert ist

Ferner ist eine Bauform vorteilhaft, bei der dem Schwimmerventil ein an sich bekannter Schalter zum Abschalten der Vakuumpumpe zugeordnet ist, was noch dadurch verbessert wird, wenn das Schwimmerventil mit einem Schalter zum Abschalten der Vakuumpumpe kombiniert ist.

Die Erfindung ist mit Vorteil zu nutzen, wenn der Behälter als transportabler Güllebehälter ausgebildet ist. Dabei ist es ins Belieben des Fachmanns gelegt, den transportablen Güllebehälter als Güllefahrzeug auszugestalten und dieses wiederum als Gülleanhänger, oder als so genannten Selbstfahrer auszubilden.

Mit Hilfe eines Ausführungsbeispiels wird nachstehend die Erfindung anhand der Zeichnungen noch näher beschrieben.

Es zeigt
Figur 1 ein Prinzipschaubild eines Gülletanks zu Beginn einer Befüllung;
Figur 2 Einzelheiten aus Figur 1, und zwar
Figur 2a
Figur 2b
Figur 2c
Figur 2d

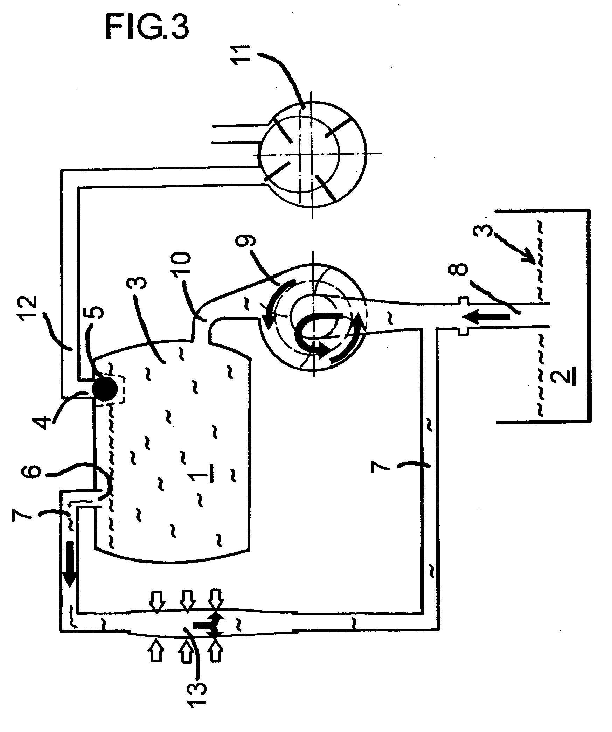

Figur 3 ein Prinzipschaubild eines Gülletanks zum Ende einer Befüllung und

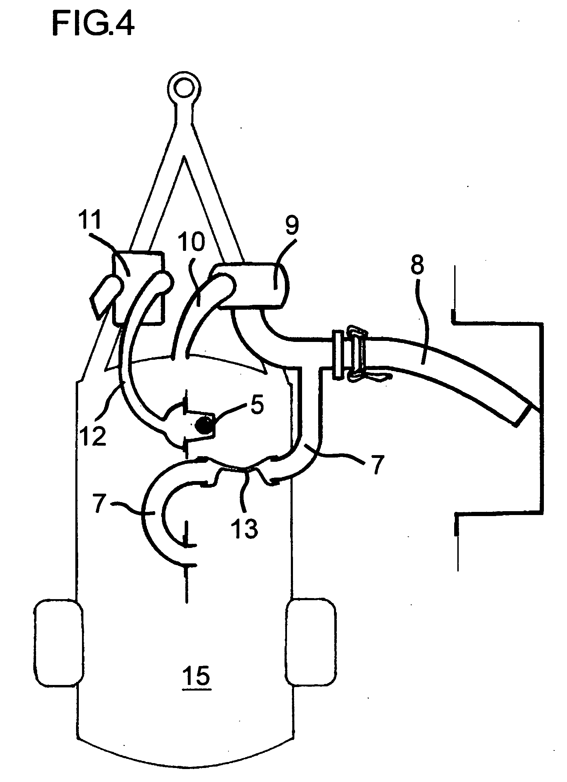

Figur 4 eine Draufsicht auf einen Güllewagen.

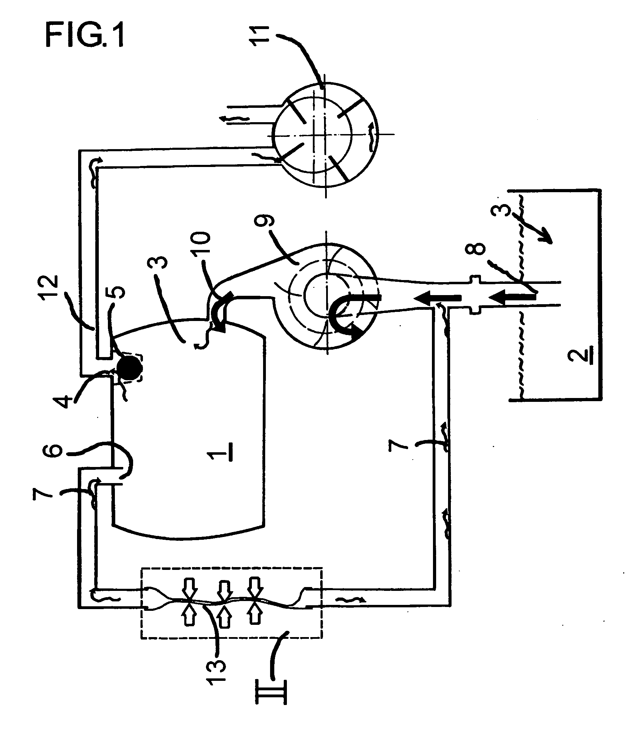

In Figur 1 ist schematisch ein Gülletank 1 dargestellt. Dieser Gülletank 1 steht als Beispiel für einen beliebigen befüll- und entleerbaren Flüssigkeitstank, worauf im Nachfolgenden nicht extra immer wieder Bezug genommen werden muss. Ferner ist in Figur 1 eine Güllegrube 2 dargestellt, die als Vorratsgrube für Gülle 3 dient und deren Inhalt in den Gülletank 1 umgefüllt werden soll. Der Gülletank 1 weist im oberen Bereich eine Entlüftungsöffnung 4 auf, welche mittels eines Schwimmerventils 5 verschließbar ist. Das Schwimmerventil 5 ist auch durch andere Bauformen realisierbar, es muss lediglich den Zweck erfüllen, die Entlüftungsöffnung 4 bei vollständiger Befüllung des Gülletanks 1 zu schließen.

Ferner weist der Gülletank 1 im oberen Bereich eine Überlauföffnung 6 auf, an die eine Überlaufleitung 7 angeschlossen ist. Die Überlaufleitung 7 wird zurückgeführt in den noch nicht erwähnten Ansaugtrakt zum Befüllen des Gülletanks 1 mit Gülle 3. Der Ansaugtrakt besteht u.a. aus einem Ansaugstutzen 8, welcher in die Gülle 3 des Güllevorratsbehälters 2 (Güllegrube) hineinragt. In diesen Ansaugstutzen 8 mündet die Überlaufleitung 7 unterhalb einer Kreiselpumpe 9 ein, welche zur Befüllung des Gülletanks 1 mit Gülle 3 dient. Mit der Kreiselpumpe 9 sind hohe Pumpleistungen erzielbar und sie wird beispielsweise direkt von der Zapfwelle eines nicht dargestellten Traktors angetrieben.

Auf der Druckseite der Kreiselpumpe 9 befindet sich die Füllleitung 10, die in den Gülletank 1 einmündet und durch welche die Gülle 3 in den Gülletank 1 gepumpt wird. Wie bereits in der Beschreibungseinleitung erwähnt ist, kann selbst eine leistungsstarke Kreiselpumpe 9 die Gülle 3 nicht selbst ansaugen, deshalb wird der Gülletank 1 durch eine Vakuumpumpe 11 evakuiert, die an die Entlüftungsöffnung 4 über eine Entlüftungsleitung 12 angeschlossen ist. Sobald ein mittels der Vakuumpumpe 11 erzeugter Unterdruck die Gülle 3 über den Ansaugstutzen 8 in der Kreiselpumpe 9 ansteigen lässt, übernimmt die nun "nass" laufende Kreiselpumpe 9 die Förderung und mit der erheblichen Leistung der Kreiselpumpe 9 wird der Gülletank 1 in kurzer Zeit gefüllt.

Auch bei dieser Füllmethode tritt aufgrund des Vakuums und die erhebliche Verwirbelung durch die Kreiselpumpe 9 Schaumbildung in der Gülle 3 auf, die den Füllgrad um 10 bis 20 Prozent reduzieren würde. Das Schwimmerventil 5 schließt nämlich die Entlüftungsöffnung 4 und im Innern des Gülletanks 1 entsteht schädlicher Überdruck. Hier greift die Funktion der Überlauföffnung 6, denn die fortlaufend gepumpte Gülle 3 steigt weiter, der Überdruck wird durch die Überlauföffnung 6 abgebaut und die Gülle 3 füllt den Gülletank 1 vollständig. In der Überlaufleitung 7 ist an geeigneter Stelle ein Ventil 13 angeordnet, welches vom Umgebungsdruck gesteuert ist. Dieses vom Umgebungsdruck gesteuerte Ventil 13 ist solange geschlossen, wie im Gülletank 1 und/oder in der Überlaufleitung 7 Unterdruck herrscht. Eine vom Umgebungsdruck gesteuerte Membran schließt dieses Ventil 13, solange der Umgebungsdruck höher ist, als der Druck im Innern des Gülletanks 1 und der entsprechenden Überlaufleitung 7. Die Membran des Ventils 13 wird bevorzugt von einem einfachen Flachschlauch realisiert, der unter Umgebungsdruck zusammengequetscht ist und das Vakuum im System, ganz speziell auf der Saugseite, aufrecht erhält. Erst wenn der Füllgrad des Gülletanks 1 so groß geworden ist, dass Überdruck im Gülletank 1 entsteht, bewirkt die über die Überlauföffnung 6 und die Überlaufleitung 7 strömende Gülle 3 einen Druckanstieg im Ventil 13, welcher dieses gegen den atmosphärischen Druck öffnet, so dass die Gülle 3 das Ventil 13 passieren und im Kreis gepumpt wird, wie zur Beschreibung der Figur 3 noch erläutert werden wird.

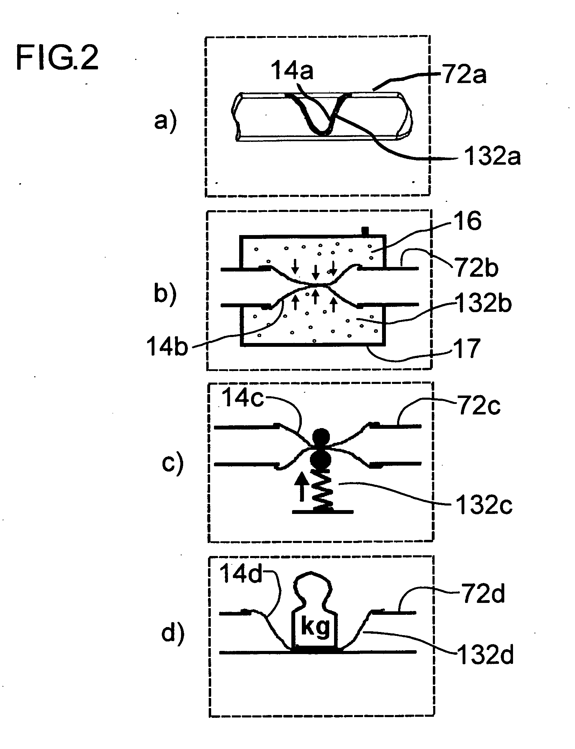

In Figur 2 sind als Alternativen weitere vom Umgebungsdruck gesteuerte Ventile schematisch dargestellt. Und zwar ist in Figur 2a in einem Rohrabschnitt 72a der Überlaufleitung 7 ein Ventil 132a dargestellt, bei dem eine Membrane 14a vorhanden ist, die sich durch den atmosphärischen Außendruck an die Innenwand des Rohabschnitts 72a schmiegt und die Überlaufleitung 7 verschließt, bis gegebenenfalls durch den Überdruck im Gülletank 1 und in der Überlaufleitung 7 das durch die Membrane 14a gebildete Ventil 132a geöffnet wird.

In Figur 2b ist als alternatives Ventil 132b eine Ausführungsform dargestellt, bei welcher der Umgebungsdruck durch Gas 16 in einer Kammer 17 erzeugt wird, welcher auf einen-dem Faltschlauch 13 aus Figur 1 entsprechenden - Faltschlauch 14b einwirkt. Der wirksame Druck des Gases 16 in der Kammer 17 kann den Erfordernissen entsprechend eingestellt werden, er stellt den Umgebungsdruck für das Ventil 132b dar.

In der Figur 2c ist ein weiteres Ventil 132c stark schematisiert gezeigt, bei dem der Umgebungsdruck durch einen federbelasteten Faltschlauch 14c realisiert ist. Auch in diesem Ausführungsbeispiel ist der Schließdruck durch die einstellbare Federkraft einstellbar und stellt für diese Ventilbauform den Umgebungsdruck dar.

Schließlich kann ein Ventil 132d auch durch eine gewichtsbelastete Membrane 14d realisiert sein. Bei einer derartigen Bauform wirkt ein Gewicht, gleich welcher Form, auf die Membrane 14d ein und schließt diese gegen die Innenwandung des Rohrabschnitts 72 der Überlaufleitung 7 ab, bis der Überdruck im Gülletank 1 und in der Überlaufleitung 7 so groß ist, dass der Innendruck den auf diese Weise erzeugten Umgebungsdruck übersteigt und das Ventil 132d geöffnet wird.

Wie aus den beschriebenen Ausführungsbeispielen ersichtlich ist, sind verschiedene Ausführungsformen eines vom Umgebungsdruck gesteuerten Ventils realisierbar. Es ist auch eine Bauform vorstellbar, bei der die Eigenelastizität der Membran oder des Faltschlauchs so gewählt ist, dass sie als vom Umgebungsdruck gesteuertes Ventil arbeitet, wobei der Umgebungsdruck beispielsweise der atmosphärische Druck sein kann.

In Figur 3 ist der befüllte Gülletank 1 dargestellt. Die Gülle 3 ist soweit im Innern des Gülletanks 1 angestiegen, dass das Schwimmerventil 5 die Entlüftungsöffnung 4 verschlossen hat. Die Kreiselpumpe 9 fördert jedoch noch eine gewisse Zeit weiter und damit im Innern des Gülletanks 1 kein Überdruck entsteht, kann die überschüssige Gülle 3 durch die Überlauföffnung 6 und die daran angeschlossene Überlaufleitung 7 entweichen. Der Überdruck der Gülle 3 öffnet das vom Umgebungsdruck gesteuerte Ventil 13, 132, dessen elastische Membran 14, bzw. dessen Faltschlauch sich aufweitet und die Gülle 3 kann das Ventil 13, 132 passieren. Sie läuft in der Überlaufleitung 7 zurück und wird im Kreis gepumpt, was besondere Vorteile für die Umwelt und die Sicherheit bedeutet.

In Figur 4 ist in Draufsicht ein Güllewagen 15 dargestellt, bei dem die Vakuumpumpe 11, die Kreiselpumpe 9, das Schwimmerventil 5, die Überlaufleitung 7, das vom Umgebungsdruck gesteuerte Ventil 13, die Füllleitung 10 und die Entlüftungsleitung 12 schematisch so dargestellt sind, wie sie an einem Güllewagen 15 angeordnet sein könnten. Diese schematische Darstellung erhebt ebenso, wie die vorbeschriebenen schematischen Darstellungen keinen Anspruch auf konstruktive Korrektheit und Maßstäblichkeit oder Vollständigkeit, die Darstellungen sollen lediglich das Prinzip der Erfindung anschaulich verdeutlichen.

Nicht dargestellt ist, dass in an sich bekannter Weise Sicherheitsschaltelemente in Form von Schaltern vorgesehen sein können. So ist es sinnvoll, im Leitungssystem Güllesensoren vorzusehen, die die Kreiselpumpe abschalten, sobald in der Überlaufleitung 7 Gülle fließt. Ebenso ist es vorteilhaft, die Vakuumpumpe 11 durch einen Schalter abzuschalten, sobald das Schwimmerventil 5 geschlossen ist. Von besonderem Vorteil ist es, die genannten Schalter mit den zugehörigen Ventilen 5 und 13 bzw. 132 direkt zu koppeln.

Ferner ist nicht dargestellt, dass die Erfindung auch mit Vorteil bei einem Behälter mit selbstansaugender Förderpumpe eingesetzt werden kann.

### Bezugszeichenliste

- 1: Gülletank
- 2: Güllegrube
- 3: Gülle
- 4: Entlüftungsöffnung
- 5: Schwimmerventil
- 6: Überlauföffnung
- 7: Überlaufleitung
- 72: Rohrabschnitt
- 72a: Rohrabschnitt
- 72b: Rohrabschnitt
- 72c: Rohrabschnitt
- 72d: Rohrabschnitt
- 8: Ansaugstutzen
- 9: Kreiselpumpe
- 10: Füllleitung
- 11: Vakuumpumpe
- 12: Entlüftungsleitung
- 13: Ventil
- 132: Ventil
- 132a: Ventil
- 132b: Ventil
- 132c: Ventil
- 132d: Ventil
- 14a: Membran
- 14b: Faltschlauch
- 14c: Faltschlauch
- 14d: Membran
- 15: Güllewagen
- 16: Gas
- 17: Kammer

## Patentansprüche

1. Behälter (1) zum Befüllen mit Flüssigkeiten (3), insbesondere Gülletank, gegebenenfalls auch auf einem Güllewagen (15), mit einer Befüllungs- und Entleerungseinrichtung, die eine Pumpe (9) zum Einfüllen bzw. Entleeren der Flüssigkeit (3) sowie ein zugehöriges Leitungssystem (7, 8, 12) und gegebenenfalls einen Vakuumkompressor (11) zum Evakuieren des Behälters (1) aufweist und mit einer Antriebseinheit für die Pumpen (9, 11), die bevorzugt an die Antriebswelle eines Schleppfahrzeuges anschließbar ist, wobei das Leitungssystem (7, 8, 12) eine Überlaufleitung (7) beinhaltet, die zwischen einer Überlauföffnung (6) im Behälter (1) und einem Ansaugstutzen (8) zum Ansaugen der Flüssigkeit (3) angeordnet ist, **dadurch gekennzeichnet, dass** in der Überlaufleitung (7) ein vom Umgebungsdruck gesteuertes Ventil (13, 132, 132a, 132b, 132c, 132d) vorhanden ist.

2. Behälter nach Anspruch 1, **dadurch gekennzeichnet, dass** das vom Umgebungsdruck gesteuerte Ventil durch einen Faltschlauch (13) gebildet ist.

3. Behälter nach Anspruch 1, **dadurch gekennzeichnet, dass** das vom Umgebungsdruck gesteuerte Ventil (132a) durch einen Rohrabschnitt (72a) mit einer elastischen Membran (14a) gebildet ist.

4. Behälter nach Anspruch 1, **dadurch gekennzeichnet, dass** das vom Umgebungsdruck gesteuerte Ventil (132b) durch einen Rohrabschnitt (72) gebildet ist, um den sich eine gasgefüllte Kammer (17) erstreckt, deren Gasfüllung (16) den Umgebungsdruck für einen Faltschlauch (14b) erzeugt.

5. Behälter nach Anspruch 1, **dadurch gekennzeichnet, dass** das vom Umgebungsdruck gesteuerte Ventil (132c) durch einen federbelasteten Faltschlauch (14c) gebildet ist.

6. Behälter nach Anspruch 1, **dadurch gekennzeichnet, dass** das vom Umgebungsdruck gesteuerte Ventil (132d) durch eine gewichtsbelastete Membran (14d) gebildet ist.

7. Behälter nach Anspruch 1, **dadurch gekennzeichnet, dass** die Kreiselpumpe (9) und die Vakuumpumpe (11) durch getrennt arbeitende Pumpen mit separaten Gehäusen gebildet sind.

8. Behälter nach Anspruch 1, **dadurch gekennzeichnet, dass** die Kreiselpumpe (9) und die Vakuumpumpe (11) in einem gemeinsamen Gehäuse kombiniert sind.

9. Behälter nach Anspruch 1, **dadurch gekennzeichnet, dass** dem vom Umgebungsdruck gesteuerten Ventil (13, 132) ein an sich bekannter Schalter zum Abschalten der Kreiselpumpe (9) zugeordnet ist.

10. Behälter nach Anspruch 9, **dadurch gekennzeichnet, dass** das Ventil (13, 132) mit einem Schalter zum Abschalten der Kreiselpumpe (9) kombiniert ist

11. Behälter nach Anspruch 1, **dadurch gekennzeichnet, dass** der Behälter (1) eine Entlüftungsöffnung (4) aufweist, welcher ein Schwimmerventil (5) zugeordnet ist, und dass dem Schwimmerventil (5) ein an sich bekannter Schalter zum Abschalten der Vakuumpumpe (11) zugeordnet ist.

12. Behälter nach Anspruch 11, **dadurch gekennzeichnet, dass** das Schwimmerventil (5) mit einem Schalter zum Abschalten der Vakuumpumpe (11) kombiniert ist.

13. Behälter nach Anspruch 8, **dadurch gekennzeichnet, dass** die kombinierten Kreisel- und Vakuumpumpen durch eine Flüssigkeitsringpumpe realisiert ist.

14. Behälter nach Anspruch 1, **dadurch gekennzeichnet, dass** der Behälter als transportabler Güllebehälter ausgebildet ist.

15. Behälter nach Anspruch 14, **dadurch gekennzeichnet, dass** der transportable Güllebehälter ein Güllefahrzeug ist.

16. Behälter nach Anspruch 15, **dadurch gekennzeichnet, dass** das Güllefahrzeug als Gülleanhänger (15) ausgebildet ist.

17. Behälter nach Anspruch 15, **dadurch gekennzeichnet, dass** das Güllefahrzeug als so genannter Selbstfahrer ausgebildet ist.

## Claims

1. Container (1) for filling with liquids (3), in particular a liquid manure tank, which may also be disposed on a liquid manure spreader (15), with a filling and draining system comprising a pump (9) for filling with and draining the liquid (3) and a co-operating pipe-work system (7, 8, 12) and optionally a vacuum compressor (11) for evacuating the container (1), and with a drive unit for the pumps (9, 11) which can preferably be connected to the drive shaft of a tractor vehicle, and the pipe-work system (7, 8, 12) incorporates an overflow pipe (7) disposed between an overflow opening (6) in the container (1) and an inlet manifold (8) for sucking the liquid (3), **characterised in that** a valve (13, 132, 132a, 132b, 132c, 132d) controlled by the ambient pressure is provided in the overflow pipe (7).

2. Container as claimed in claim 1, **characterised in that** the valve controlled by the ambient pressure is provided in the form of a collapsible hose (13).

3. Container as claimed in claim 1, **characterised in that** the valve (132a) controlled by the ambient pressure is provided in the form of a pipe section (72a) with an elastic membrane (14a).

4. Container as claimed in claim 1, **characterised in that** the valve (132b) controlled by the ambient pressure is provided in the form of a pipe section (72) around which a gas-filled chamber (17) extends, the gas filling device (16) of which generates the ambient pressure for a collapsible hose (14b).

5. Container as claimed in claim 1, **characterised in that** the valve (132c) controlled by the ambient pressure is provided in the form of a spring-biased collapsible hose (14c).

6. Container as claimed in claim 1, **characterised in that** the valve (132d) controlled by the ambient pressure is provided in the form of a dead-weight membrane (14d).

7. Container as claimed in claim 1, **characterised in that** the centrifugal pump (9) and the vacuum pump (11) are provided in the form of separately operating pumps with separate housings.

8. Container as claimed in claim 1, **characterised in that** the centrifugal pump (9) and the vacuum pump (11) are combined in a common housing.

9. Container as claimed in claim 1, **characterised in that** the valve (13, 132) controlled by the ambient pressure co-operates with a switch of a type known per se, for switching off the centrifugal pump (9).

10. Container as claimed in claim 9, **characterised in that** the valve (13, 132) is combined with a switch for switching off the centrifugal pump (9).

11. Container as claimed in claim 1, **characterised in that** the container (1) has a venting orifice (4) co-operating with a float valve (5), and a switch of a type known per se co-operates with the float valve (5) in order to switch off the vacuum pump (11).

12. Container as claimed in claim 1 **characterised in that** the float valve (5) is combined with a switch for switching off the vacuum pump (11).

13. Container as claimed in claim 8, **characterised in that** the combined centrifugal and vacuum pumps are provided in the form of a liquid ring pump.

14. Container as claimed in claim 1, **characterised in that** the container is designed as a transportable liquid manure container.

15. Container as claimed in claim 14, **characterised in that** the transportable liquid manure container is a liquid manure spreader.

16. Container as claimed in claim 15, **characterised in that** the liquid manure spreader is designed as a liquid manure trailer (15).

17. Container as claimed in claim 15, **characterised in that** the liquid manure spreader is designed as a so-called self-propelled vehicle.

## Revendications

1. Réservoir (1) pour le remplissage avec des liquides (3), en particulier réservoir à lisier, le cas échéant également sur un wagon à lisier (15), avec une installation de remplissage et de vidage, qui présente une pompe (9) pour introduire respectivement évacuer le liquide (3) ainsi qu'un système de conduites associé (7, 8, 12) et le cas échéant un compresseur à vide (11) pour évacuer le réservoir (1), et avec une unité d'entraînement des pompes (9, 11) qui peut être raccordée de préférence à l'arbre d'entraînement d'un véhicule de traction, où le système de conduites (7, 8, 12) comporte une conduite de débordement (7) qui est disposée entre une ouverture de débordement (6) dans le réservoir (1) et une tubulure d'aspiration (8) pour aspirer le liquide (3), **caractérisé en ce qu'** il est réalisé dans la conduite de débordement (7) une vanne (13, 132, 132a, 132b, 132c, 132d) commandée par la pression ambiante.

2. Réservoir selon la revendication 1, **caractérisé en ce que** la vanne commandée par la pression ambiante est formée par un tuyau pliant (13).

3. Réservoir selon la revendication 1, **caractérisé en ce que** la vanne (1 32a) commandée par la pression ambiante est formée par une section tubulaire (72a) avec une membrane élastique (14a).

4. Réservoir selon la revendication 1, **caractérisé en ce que** la vanne (1 32b) commandée par la pression ambiante est formée par une section tubulaire (72) autour de laquelle s'étend une enceinte (17) remplie de gaz, dont le remplissage gazeux (16) produit la pression ambiante pour un tuyau pliant (14b).

5. Réservoir selon la revendication 1, **caractérisé en ce que** la vanne (132c) commandée par la pression ambiante est formée par un tuyau pliant (14c) chargé par ressort.

6. Réservoir selon la revendication 1, **caractérisé en ce que** la vanne (132d) commandée par la pression ambiante est formée par une membrane (14d) chargée par un poids.

7. Réservoir selon la revendication 1, **caractérisé en ce que** la pompe centrifuge (9) et la pompe à vide (11) sont formées par des pompes fonctionnant séparément avec des carters séparés.

8. Réservoir selon la revendication 1, **caractérisé en ce que** la pompe centrifuge (9) et la pompe à vide (11) sont combinées dans un carter commun.

9. Réservoir selon la revendication 1, **caractérisé en ce qu'**il est associé à la vanne (13, 132) commandée par la pression ambiante un commutateur connu en soi pour la mise hors service de la pompe centrifuge (9).

10. Réservoir selon la revendication 9, **caractérisé en ce que** la vanne (13, 132) est combinée avec un commutateur pour la mise hors service de la pompe centrifuge (9).

11. Réservoir selon la revendication 1, **caractérisé en ce que** le réservoir (1) présente une ouverture d'aéaration (4) à laquelle est associée une vanne flottante (5), et **en ce qu'**il est associé à la vanne flottante (5) un commutateur connu en soi pour la mise hors service de la pompe à vide (11).

12. Réservoir selon la revendication 1 **caractérisé en ce que** la vanne flottante (5) est combinée avec un commutateur pour la mise hors service de la pompe à vide (11).

13. Réservoir selon la revendication 8, **caractérisé en ce que** les pompes centrifuge et à vide combinées sont réalisées par une pompe annulaire de liquide.

14. Réservoir selon la revendication 1, **caractérisé en ce que** le réservoir est réalisé comme réservoir de lisier transportable.

15. Réservoir selon la revendication 14, **caractérisé en ce que** le réservoir de lisier transportable est un véhicule de lisier.

16. Réservoir selon la revendication 15, **caractérisé en ce que** le véhicule de lisier est réalisé comme remorque de lisier (15).

17. Réservoir selon la revendication 15, **caractérisé en ce que** le véhicule de lisier est réalisé comme soi-disant auto-moteur.
